# EUROPEAN PATENT APPLICATION

(11) **EP 2 352 105 A1**
(43) Date of publication of application: **03.08.2011**
(21) Application number: 09838103.1
(22) Date of filing: 29.07.2009
(51) Int. Cl.: G06F 17/30

(54) **METHOD AND SYSTEM OF GRAPHICS DESCRIPTION AND TRANSFORMATION**

(30) Priority: 30.12.2008 CN 200810241130
(71) Applicant: State Grid Corporation of China, Beijing 100031 (CN)
(72) Inventor: XIN, Yaozhong, Beijing 100031 (CN); LI, Wei, Beijing 100031 (CN); SHEN, Guohui, Beijing 100031 (CN); TAO, Hongzhu, Beijing 100031 (CN); HUANG, Kun, Beijing 100031 (CN); BIAN, Xiaoyu, Beijing 100031 (CN); LI, Yaping, Beijing 100031 (CN); YAO, Jianguo, Beijing 100031 (CN); ZHAO, Lin, Beijing 100031 (CN); LI, Yisong, Beijing 100031 (CN); SHANG, Xuewei, Beijing 100031 (CN)
(74) Representative: Kling, Simone
(86) International application number: PCT/CN2009/072972
(87) International publication number: WO 2010/081316

(57) **Abstract**

The present invention discloses a method for describing and transforming a graphic, which includes the steps of: receiving, by a queried system, a request from a query system to obtain a graphic; performing, by the queried system, metadata description of a device object corresponding to the graphic as common information for storage; and transmitting by the queried system the metadata description of the device object to the query system; and wherein a correspondence relationship between the graphic of the device object and the metadata description of the device object is pre-stored in both the query system and the queried system together with the graphic of the device object.

## Description

This application claims the priority of Chinese Patent Application No. 200810241130.9, filed with the Chinese Patent Office on December 30, 2008 and entitled "Method and system for describing and transforming graphic", which is hereby incorporated by reference in its entirety.

### Field of the Invention

The present invention relates to the field of data interaction and in particular to a method and system for describing and transforming graphic.

### Background of the Invention

There are a plurality of independent application systems in the existing power scheduling system, and each independent application system typically have different storage formats in which a graphic is stored due to different manufacturers. The storage formats are generally defined by the manufacturers themselves. Thus, different applications are performed in respective power enterprises subordinated to power scheduling systems and the scheduling systems of the different power enterprises cannot interact directly, which results in difficulty of sharing data and information between the respective systems.

In view of this, State Grid Corporation of China has established the "SVG Based Common Graphic Interchange Format" based upon the IEC61970-453 "CIM Based Graphic Interchange" and organized several domestic interoperation experiments to prove and improve the interchange format. The interchange format lay a solid foundation for data sharing and information interacting between power scheduling systems so that both data sharing and applications interacting between the respective power scheduling systems can be realized to some extent.

The description specification of Scalable Vector Graphic (SVG) is an XML based description specification of Scalable Vector Graphic which is customized by organization of W3C to adapt to the necessary for the rapid development of the Internet Web applications. The organization of W3C defines the SVG as "a language to describe a two-dimension graphic in the Extensible Markup Language (XML)". An SVG format based power system graphic format is generally divided into two parts: a graphic primitive and style definition part, and a power system graphic object part.

The graphic primitive and style definition part is included between double quotation marks--"", wherein uniform styles and graphic primitives may be used to a uniformly defined graphic. If the style of this part is used in a graphic, the option of "class" of the graphic can be set as the required "style". If the graphic primitive definition of this part is in use, the option of "use" of the graphic can be set as the required "symbol". Information on the graphic primitives and styles is uniformly defined primarily for the purpose of uniform modification of a style and a graphic primitive. This will make it more convenient to set the color of a specific level of voltage or dynamically render a graphic.

Graphic object of power systems generally refer to electrical devices in the respective power systems, e.g., a breaker, a bus bar, an outlet line, a knife switch, a capacitor, a reactance, a generator, a transformer, a load, etc. A graphic primitive object of a power system possesses both a characteristic inherent to an "element" of an SVG graphic and an attribute of a power system resource attached in "metadata". The attribute of this part can be used to make a necessary association between the graphic and an existing domain model of a power system.

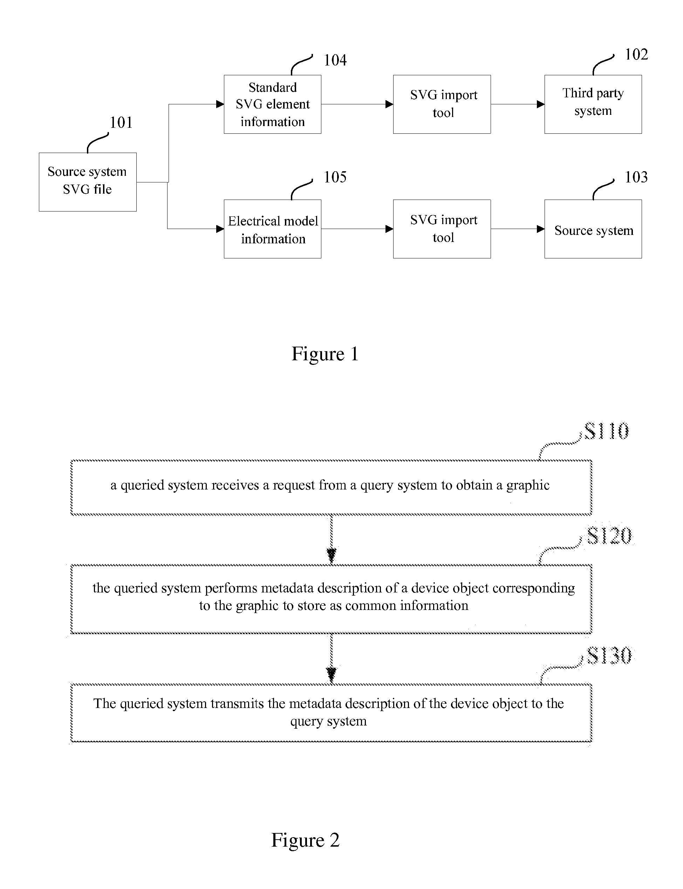

Reference is made to Fig.1 illustrating a flow chart of transforming a standard SVG file into a private graphic format required for a target system in the prior art.

A standard source system SVG file 101 is transformed into a private graphic format required for a target system, i.e., a third party system 102, or a source system 103, and the display of a graphic is realized in the target system, i.e., the third party system 102 or the source system 103.

Standard SVG element information 104 and electrical model information 105 are extracted from the source system SVG file 101 and then transmitted into the third party system 102 and the source system 103 respectively through SVG import tools.

The SVG is a universal vector graphic specification established to cater to rapid development of Internet web applications, but the common graphic interchange format of a power system described based upon the SVC can neither fully describe attributes of a power device nor efficiently express a characteristic of the power device. The drawbacks of the SVG generally lie in the following aspects:

The SVG per se is a universal vector graphic format developed for Internet Web applications but cannot directly express the concept of the integration of a graphic and a model of a power system. The common graphic format of a power system described based upon the SVG has to describe an object of a power device by the attribute of "element" of the SVG graphic and meanwhile has to describe the attribute of the power device by the attribute of "metadata" to thereby associate the graphic with the existing domain model of a power system.

In the common graphic interchange format of a power system described based upon the SVG, graphic primitive objects are described by <symbol>, and said graphic primitive objects have to be included in the same SVG file so that the same power device graphic primitive is included repeatedly in different power device graphics, which may result in a very large graphic file of the power system in the SVG interactive format and thus unable to perform online reference and interaction of a graphic between different systems.

The existing common graphic interchange format of a power system described based upon the SVG cannot express the concept of a spacing device in the power system.

In consideration of the foregoing drawbacks, it is desired for those skilled in the art to address such a technical problem of how to provide a method and the corresponding system for describing and transforming a graphic so as to overcome the failure of fully describing attributes of a power device in the existing common graphic interchange format of a power system described based upon the SVG and to improve the expressing efficiency of a characteristic of the power device.

### Summary of the Invention

In view of the foregoing drawbacks, a technical problem to be addressed by the invention is to provide a method and system for describing and transforming graphic so as to fully describe attributes of a power device in the common graphic interchange format of a power system described based upon the SVG and improve the expressing efficiency of a characteristic of the power device to thereby interchange a power device information and power graphics between different systems.

The invention particularly provides a method for describing and transforming graphic, which includes the steps of:
receiving, by a queried system, a request from a query system to obtain a graphic;
performing, by the queried system, metadata description of a device object corresponding to the graphic to store as common information; and
transmitting, by the queried system, the metadata description of the device object to the query system;
wherein a correspondence relationship between the graphic of the device object and the metadata description of the device object is pre-stored in both the query system and the queried system together with the graphic of the device object.

Preferably, performing the metadata description of a device object corresponding to the graphic to store as common information includes:
performing the metadata description of the device object corresponding to the graphic, expressing the type of the device object in XML label, and storing the metadata description as common information; and
describing the graphic per se.

Preferably, transmitting the metadata description of the device object and the description of the graphic per se to the queried system in which the correspondence relationship between the graphic of the device object and the metadata description of the device object is pre-stored together with the graphic of the device object.

Preferably, the metadata description of the device object includes descriptions of a definition of voltage level, a graphic primitive, an interval, a font, a color and a menu.

Preferably, the metadata description of the device object corresponding to the graphic is described in G language as common information,
wherein the G language adopts fundamental graphic elements defined in the compatible SVG.

Preferably, the query system is a power scheduling system, a power company or a power plant.

Preferably, the queried system is a power scheduling system, a power company or a power plant identical to or different from the query system.

The invention provides a system for describing and transforming a graphic, which includes:
a query system adapted to receive a request from a queried system to obtain a graphic;
a first processing unit adapted to perform metadata description of a device object in the graphic to store as common information; and
the queried system adapted to receive the metadata description of the device object derived from the processing unit and transmitted from the query system,
wherein a correspondence relationship between the graphic of the device object and the metadata description of the device object is pre-stored in both the query system and the queried system together with the graphic of the device object.

Preferably, the system further includes a second processing unit connected with the query system and the queried system and adapted to express the type of the device object in XML label and to describe the graphic per se.

Preferably, the first processing unit is adapted to describe the metadata description of the device object corresponding to the graphic in G language as common information, wherein the G language adopts fundamental graphic elements defined in the compatible SVG.

Preferably, the metadata description of the device object includes descriptions of a definition of voltage level, a graphic primitive, an interval, a font, a color and a menu.

In the method for describing and transforming a graphic according to the embodiment of the invention, since the metadata description of a device object is uniformly performed, stored as common information and then distributed throughout the whole system, and since a correspondence relationship between a graphic of the device object and the metadata of the device object is pre-stored in both an invoking system and an invoked system together with the graphic of the device object, the queried system can retrieve the corresponding graphic primitive of the device object according to the metadata as long as the invoking system transmits the graphic primitive object cited by the device to the invoked system. The method and system for describing and transforming a graphic according to the embodiment of the invention describe and express fundamental graphic elements based on compatible SVG standard, extend a description of a power device in the XML standard, truly express a full description of attributes of a power device in a common graphics interchange format of a power system and improve the expressing efficiency for a characteristic of the power device. The method for describing and interchanging a graphic according to the invention can address the problem of an information isolated island due to inconsistency of graphic data formats between power scheduling systems and lay a solid data foundation for intercommunication between peer scheduling systems as well as upper and lower scheduling systems.

### Brief Description of the Drawings

Fig.1 is a flow chart of transforming a standard SVG file into a private graphic format required for a target system in the prior art;

Fig.2 is a flow chart of a method for describing and transforming a graphic according to an embodiment of the invention;

Fig.3 is a structural diagram of a system for describing and transforming a graphic according to an embodiment of the invention.

### Detailed Description of the Invention

The invention provides a method and system for describing and transforming a graphic to fully describe attributes of a power device in a common graphic interchange format of a power system described based upon the XML standard and improve the expressing efficiency for a characteristic of the power device to thereby interchange a power device information and power graphics between different systems.

In a technical solution according to the invention, a power device information and power graphics can be interchanged between different systems, manufactures and power scheduling systems to completely address the problem of an information isolated island due to the failure of interchanging data between heterogeneous systems and realize data sharing and intercommunication between peer systems as well as upper and lower systems.

A new and efficient graphics describing language suitable for power systems, i.e., G language, is proposed to address the foregoing drawbacks of the common graphic interchange format of a power system described based upon the SVG, accommodate one-time maintenance and network-wide sharing of graphic data between power scheduling systems and truly realize intercommunication between the power scheduling systems.

The G language generally includes two categories, one of which is common information of a system including a definition of voltage level, a graphic primitive, an interval, a menu, etc., as metadata description of a power device to be shared throughout the system. The other category is a graphical description of a specific power plant for which a graphic primitive and an interval are shared for displaying by invoking a foreign file in the G language, thus reducing greatly the amount of interchanged data of the graphic file. Also the G language is a markup based plain text language in compliance with the XML standard, and mutual conversion between the G language and the SVG is possible.

A graphic element as specified in the G language possesses the following features:

(1) A detailed description is given of a general method for connecting a graphic object and domain data which will be interchanged separately.

(2) The type of a power device is expressed directly in a XML label.

(3) Interchange of a graphic object in no association with domain data, e.g., a pure static background object, is supported.

(4) Interchange of a complex object supports a hotspot link, naming and a menu, a curve and a histogram, voice, image and animation, and an event.

(5) Various expressing forms of the same domain object in the same or different graphic are support.

(6) The use of a graphic topology to describe a topology relationship is supported without any domain topology model.

(7) Graphic objects arranged in layers or otherwise are supported to display or hide some information based upon a scaling level and/or an aspect of interest to a user.

(8) There are two categories of graphic files: one category is a file to describe a graphic per se, and the other is a description of a common part including a graphic primitive, an interval, a font, a color, etc., in the system.

The G language with the foregoing features can completely address the drawbacks of the common graphic interchange format of a power system described based upon the SVG.

Based upon learning from and inheriting the experience of the common graphic interchange format of a power system described based upon the SVG, the G language describes and expresses a fundamental graphic element with compatible SVG standard and extends a description of a power device in XML standard. The G language extended for a power system adopts flexible and abundant graphic expression elements in compatible SVG standard to form a basic of a descriptive graphic of an electrical device of a power system, thus complying with an international standard for defining a fundamental graphic element and an international trend of software development and also considering the situation of China and satisfying a demand of a power scheduling system in the power industry of China.

The G language specification is hierarchical in language as follows:

| Private language to describe a power device - G language | |
|---|---|
| Graphical description compatible with SVG standard | Description of a power device in compliance with the standard in the power industry |
| XML | |

The G language specification is defined specifically as follows:

(1) Symbols are defined as follows:

| No. | Symbol | Definition |
|---|---|---|
| 1 | < > | Starting symbol of element |
| 2 | </ > | Ending symbol of element |
| 3 | <! | Starting symbol of system statement |
| 4 | !> | Ending symbol of system statement |
| 7 | <!- - → | Leading symbol of comment |
| 9 | = | Assignment connection symbol |

Noted that the foregoing symbols are DBC case symbols of English.

(2) Definitions of fundamental graphic elements

The G language adopts fundamental graphic elements defined by the compatible SVG, and attribute names of these graphic elements are in lowercase letters.

| Element name | Attributes included | Example |
|---|---|---|
| line | x1, y1, x2, y2, ls, lc, lw, etc. | <line x1 y1 x2 y2 ls lc lw /> |
| rect | x, y, rx, ry, w, h, ls, lc, lw, fc, fm, tr | <rect x y w h ls lc lw fc fm tr /> |
| circle | cx, cy, r, ls, lc, lw, fc, tr, etc. | <circle cx cy r ls lc lw fc tr/> |
| ellipse | cx, cy, rx, ry, ls, lc, lw, fc, tr, etc. | <ellipse cx cy rx ry ls lc lw fc tr/> |
| polyline | ps, ls, lc, lw, etc. | <polyline ps ls lc lw/> |
| polygon | ps, ls, lc, lw, fc, tr, etc. | <polygon ps ls lc lw fc/> |
| text | x, y, fs, ff, lc, fc, ts, wm, etc. | <text x y fs ff lc fc ts wm/> |
| path | d, ls, lc, lw, fc, etc. | <path d ls lc lw fc /> |
| image | x, y, w, h, href, etc. | <image x y w h href> |

(3) Definition of device feature of power system

A. Voltage level and color

Colors of an electric grid and a power device are defined uniformly by voltage level, and in the G language, a color of the voltage level is defined in a head file and cited directly with reference to the name of voltage level, for example, "kv500" represents "Red" with a value of RGB (255, 0, 0).

The defined color generally refers to a color for a stroke line of a graphic of a power system and a color with which a closed graphic is filled. A color of a text in a display can be consistent with a color of the voltage level of a relevant device or adopt uniform color according to usage, for example, all the static texts are in the color of "Orange" and all the dynamic texts are in the color of "Green".

**<VoltageColors>**

| | |
|---|---|
| <kv1000 "blue" | " 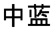 " RGB (0,0,255) /> |
| <kv800 "blue" | " 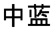 " RGB (0,0,255) /> |
| <kv750 "orange" | " 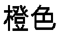 " RGB ( 250,128 ,10 ) /> |
| <kv660 "orange" | " 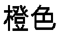 " RGB ( 250,128 ,10 ) /> |
| <kv500 "red" | " 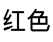 " RGB ( 255,0 ,0 ) /> |
| <kv330 "brightblue" | " 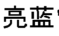 " RGB ( 30,144 ,255 ) /> |
| <kv220 "purple" | " 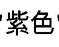 " RGB ( 128,0 ,128 ) /> |
| <kv110 "vermeil" | " 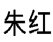 " RGB ( 240,65 ,85 ) /> |
| <kv66 "gold" | " 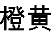 " RGB ( 255,204,0 ) /> |
| <kv35 "yellow" | " 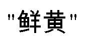 RGB ( 255,255 ,0 ) /> |
| <kv20 "brown" | " 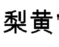 " RGB ( 226,172 ,6 ) /> |
| <kv15 "darkgreen" | " 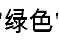 " RGB ( 0,128 ,0 ) /> //kv15.75 |
| <kv13 "lightgreen" | " 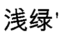 " RGB ( 0,210 ,0 ) /> //kv13.8 |
| <kv10 "crimson" | " 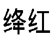 " RGB ( 185,72 ,66 ) /> // |
| <kv6 "darkbule" | " 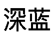 " RGB ( 0,0 ,139 ) /> // |
| <kv0W "grey" | " 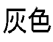 " RGB ( 128,128 ,128 ) /> //In light background |
| <kv0B "white" | " 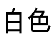 " RGB ( 255,255 ,255 ) /> //In dark background |

</VoltageColors>

B. Graphic element of power device

For elements, graphic primitive are typically used with required parameters of graphic attributes including x, y, w, h, tr and href, where x, y, w and h characterize the size of a rectangular area of the graphic, tr including Rotate, Scale, Translate and Skew characterizes rotation, scaling, translation and skewing of the original graphic in this rectangular area.

The G language is associated with domain data by metadata with relevant elements including ID and Name.

ID information of a device in the G language represents a reference to device resource information, and the ID corresponds to rdf:ID of the device in the CIM/XML model and has a default of Null.

Link information of the device in the G language represents a reference to device resource information, and the ID corresponds to rdf:ID of a Connectivity Node in the model of CIM/XML and has a default of Null.

ID information of measurement in the G language represents a reference to measurement resource information, and the ID corresponds to rdf:ID of measurement in the model of CIM/XML and has a default of Null.

Specific definitions of graphic elements of a device in a electric grid can refer to "Graphic Descriptive Language for a power system -G Language Specification".

A flow of editing and invoking power graphic data in the G language is as follows.

Reference is made to Fig.2 illustrating a flow chart of a first embodiment of a method for describing and transforming a graphic according to the invention.

The method for describing and transforming a graphic according to the first embodiment of the invention includes the following steps:

S110: receiving, by a queried system, a request from a query system to obtain a graphic.

S120: performing, by the queried system, metadata description of a device object corresponding to the graphic to store as common information.

Metadata description is performed for a device object corresponding to the graphic, the type of the device object is expressed in a XML label, the metadata description is stored as common information, and the graphic per se is described.

The metadata description of the device object includes descriptions of a definition of voltage level, a graphic primitive, an interval, a font, a color, a menu, etc.

Specifically, the metadata description is performed for a device object corresponding to the graphic in the G language as common information. The G language adopts fundamental graphic elements defined by the compatible SVG.

S130: transmitting, by the queried system, the metadata description of the device object to the query system.

The metadata description of the device object and the description of the graphic per se are transmitted to the queried system in which a correspondence relationship between the graphic of the device object and the metadata description of the device object is pre-stored together with the graphic of the device object.

The correspondence relationship between the graphic of the device object and the metadata description of the device object is pre-stored in both the query system and the queried system together with the graphic of the device object.

In the method for describing and transforming a graphic according to the embodiment of the invention, since the metadata description of the device object corresponding to the graphic as common information is performed, and the metadata description of the device object is transmitted to the queried system, and since the correspondence relationship between the graphic of the device object and the metadata description of the device object is pre-stored in both the query system and the queried system together with the graphic of the device object, the queried system can retrieve the corresponding graphic of the device object according to the metadata as long as the query system transmits the metadata of the device to the queried system. The method for describing and transforming a graphic according to the invention can address the problem of an information isolated island due to inconsistency of graphic data formats between power scheduling systems and lay a solid data foundation for data intercommunication between peer scheduling systems as well as upper and lower scheduling systems.

The query system is particularly a power scheduling system, a power company or a power plant. The queried system is particularly a power scheduling system, a power company or a power plant identical to or different from the query system.

The method for describing and transforming a graphic according to the invention can interchange a power device information and power graphics between different systems, manufacturers and power scheduling systems, completely address the problem of an information isolated island due to the failure of interchanging data between heterogeneous systems and truly realize data sharing and intercommunication between peer systems as well as upper and lower systems.

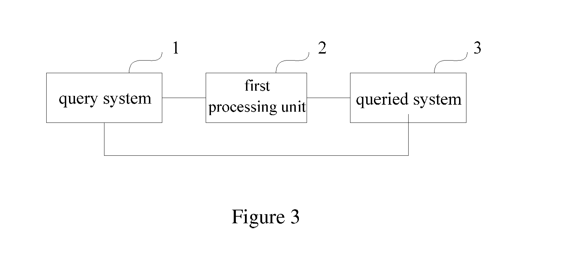

Reference is made to Fig.3 illustrating a structural diagram of a system for describing and transforming a graphic according to an embodiment of the invention.

The system for describing and transforming a graphic according to the embodiment of the invention includes:

A query system 1 is adapted to receive a request from a queried system to obtain a graphic.

A first processing unit 2 is adapted to perform metadata description of a device object in the graphic as common information.

The queried system 3 is adapted to receive the metadata description of the device object derived from the processing unit 2 and transmitted from the query system 1.

A correspondence relationship between the graphic of the device object and the metadata description of the device object is pre-stored in the query system 1 and the queried system 3 together with the graphic of the device object.

The system can further include a second processing unit (not illustrated) connected with the query system 1 and the queried system 3.

A second processing unit adapted to express the type of the device object in a XML label and to describe the graphic per se.

The first processing unit 2 performs the metadata description of the device object corresponding to the graphic as common information in the G language in which fundamental graphic elements defined in the compatible SVG are adopted.

The metadata description of the device object includes descriptions of a definition of voltage level, a graphic primitive, an interval, a font, a color and a menu.

In the system for describing and transforming a graphic according to the embodiment of the invention, since the first processing unit 2 can perform the metadata description of the device object corresponding to the graphic as common information and transmit the metadata description of the device object to the query system 1, and since the correspondence relationship between the graphic of the device object and the metadata description of the device object is pre-stored in both the query system 1 and the queried system 3 together with the graphic of the device object, the queried system 3 can retrieve the corresponding graphic of the device object according to the metadata as long as the query system 1 transmits the metadata of the device to the queried system 3. The method for describing and transforming a graphic according to the invention can address the problem of an information isolated island due to inconsistency of graphic data formats between power scheduling systems and lay a solid data foundation for data intercommunication between peer scheduling systems as well as upper and lower scheduling systems.

The query system 1 is particularly a power scheduling system, a power company or a power plant. The queried system 2 is particularly a power scheduling system, a power company or a power plant identical to or different from the query system.

The system for describing and transforming a graphic according to the invention can interchange a power device information and power graphics between different systems, manufacturers and power scheduling systems, completely address the problem of an information isolated island due to the failure of interchanging data between heterogeneous systems and truly realize data sharing and intercommunication between peer systems as well as upper and lower systems.

The foregoing descriptions are merely illustrative of preferred embodiments of the invention, and it shall be noted that those ordinarily skilled in the art can further make modifications and variations without departing from the principal of the invention and these modifications and variations shall also be construed as falling into the claimed scope of the invention.

## Claims

1. A method for describing and transforming a graphic, **characterized in** comprising the steps of:
receiving, by a queried system, a request from a query system to obtain a graphic;
performing, by the queried system, metadata description of a device object corresponding to the graphic to store as common information; and
transmitting, by the queried system, the metadata description of the device object to the query system;
wherein a correspondence relationship between the graphic of the device object and the metadata description of the device object is pre-stored in both the query system and the queried system together with the graphic of the device object.

2. The method according to claim 1, wherein performing the metadata description of a device object corresponding to the graphic to store as common information comprises:
performing the metadata description of the device object corresponding to the graphic, expressing the type of the device object in a XML label, and storing the metadata description as common information; and
describing the graphic per se.

3. The method according to claim 2, wherein:
transmitting the metadata description of the device object and the description of the graphic per se to the queried system in which the correspondence relationship between the graphic of the device object and the metadata description of the device object is pre-stored together with the graphic of the device object.

4. The method according to claim 1, wherein the metadata description of the device object comprises descriptions of a definition of voltage level, a graphic primitive, an interval, a font, a color and a menu.

5. The method according to claim 1, wherein the metadata description of the device object corresponding to the graphic as common information is performed in the G language,
wherein the G language adopts fundamental graphic elements defined in the compatible SVG.

6. The method according to claim 1, wherein the query system is a power scheduling system, a power company or a power plant.

7. The method according to claim 1, wherein the queried system is a power scheduling system, a power company or a power plant identical to or different from the query system.

8. A system for describing and transforming a graphic, **characterized in** comprising:
a query system adapted to receive a request from a queried system to obtain a graphic;
a first processing unit adapted to perform metadata description of a device object in the graphic to store as common information; and
the queried system adapted to receive the metadata description of the device object derived from the processing unit and transmitted from the query system,
wherein a correspondence relationship between the graphic of the device object and the metadata description of the device object is pre-stored in both the query system and the queried system together with the graphic of the device object.

9. The system according to claim 8, wherein the system further comprises a second processing unit connected with the query system and the queried system and adapted to express the type of the device object in a XML label and to describe the graphic per se.

10. The system according to claim 8, wherein the first processing unit is adapted to perform the metadata description of the device object corresponding to the graphic as common information in G the language, wherein the G language adopts fundamental graphic elements defined in the compatible SVG.

11. The system according to claim 8, wherein the metadata description of the device object comprises descriptions of a definition of voltage level, a graphic primitive, an interval, a font, a color and a menu.
